# EUROPÄISCHE PATENTSCHRIFT

(11) **EP 2 503 300 B1**
(45) Veröffentlichungstag und Bekanntmachung des Hinweises auf die Patenterteilung: **08.04.2015**
(21) Anmeldenummer: 12000851.1
(22) Anmeldetag: 10.02.2012
(51) Int. Cl.: G01D 5/244, G01D 5/14

(54) **Elektrische Antriebsmaschine und Verfahren zum Betreiben einer elektrischen Antriebsmaschine**
Electrical drive machine and method for operating such an electrical drive machine
Machine d'entraînement électrique et procédé de fonctionnement d'une machine d'entraînement électrique

(30) Priorität: 23.03.2011 DE 102011014881
(43) Veröffentlichungstag der Anmeldung: 26.09.2012
(73) Patentinhaber: FESTO AG & Co. KG, 73734 Esslingen (DE)
(72) Erfinder: Clauß, Christin, Dr., 73760 Ostfildern (DE); Scheller, Stefan, 70188 Stuttgart (DE); Hemminger, Hans-Jörg, 73734 Esslingen (DE); Apel, Michael, 73734 Esslingen (DE)
(74) Vertreter: Patentanwälte Magenbauer & Kollegen Partnerschaft mbB

(56) Entgegenhaltungen:
- EP-A1- 0 995 974
- DE-C1- 10 111 399

## Beschreibung

Die Erfindung betrifft eine elektrische Antriebsmaschine mit einem Läufer und einem Stator sowie mit einer Messeinrichtung, die zur Ermittlung einer Position des relativbeweglich zum Stator gelagerten Läufers ausgebildet ist und die ein Sensorsystem für eine Bereitstellung von Sensorsignalen in Abhängigkeit von der Position des Läufers relativ zum Stator und eine Verarbeitungseinrichtung zur Ansteuerung des Sensorsystems, zur Verarbeitung der Sensorsignale sowie zur Ausgabe eines Positionssignals umfasst, wobei die Verarbeitungseinrichtung für eine Umschaltung zwischen einem ersten Betriebszustand mit kontinuierlicher oder hochfrequent intermittierender Bereitstellung von Versorgungsenergie an das Sensorsystem und einem zweiten Betriebszustand mit niederfrequent intermittierender Bereitstellung von Versorgungsenergie an das Sensorsystem ausgebildet ist. Ferner betrifft die Erfindung ein Verfahren zum Betreiben einer elektrischen Antriebsmaschine.

Aus der EP 1 471 331 A2 ist ein Verfahren zur Positionserfassung eines sich bewegenden Elements mittels eines Sensors bekannt, der eine Magnetisierung an dem Element erfasst. Bei eingeschalteter Betriebsspannung wird die Position als Zählergebnis einer alternierenden Nordpol-Südpol-Magnetisierung durch einen magnetempfindlichen Sensor erfasst, bei ausgeschalteter Betriebsspannung findet eine Versorgung des Sensors mit Energie aus einem Energiespeicher und eine Speicherung der gezählten Pole in einer Speichereinrichtung statt.

Aus der DE 101 11 399 C1 ist ein inkrementaler Messwertgeber zur Erzeugung eines absoluten Positionswertes bekannt. Der Messwertgeber umfasst einen Codeträger als Massverkörperung und mindestens einem Lesekopf zur Erzeugung von mindestens zwei zueinander phasenverschobenen analogen Messsignalen, wobei der Codeträger oder der Lesekopf relativ zueinander verschiebbar angeordnet sind. Ferner umfasst der Messwertgeber einen ersten Mikroprozessor zur analogen und digitalen Signalverarbeitung und Signalkorrektur. Dem ersten Mikroprozessor ist ein bei Ausfall oder Störung der Versorgungsspannung einschaltbarer, mit einem Batteriepuffer versehener zweiter Mikroprozessor mit gegenüber dem ersten Mikroprozessor wesentlich geringerer Abtastfrequenz parallel geschaltet.

Die EP 0 995 974 A1 offenbart einen Drehgeber mit einer Geberwelle, die eine erste Codierscheibe für Singleturn-Messung und eine zweite Codierscheibe für Multiturn-Messung trägt. Der Drehgeber umfasst ein Logikmodul, das Signale einer der Multiturn-Codierscheibe zugeordneten Auswerteelektronik erhält. Dieses Logikmodul wird nur bei einem Pegelwechsel der Signale eines Sensors bzw. bei einem Taktimpuls mit Strom/Spannung versorgt.

Derartige Verfahren und Vorrichtungen werden unter Anderem zur Bestimmung der relativen Lage eines Läufers gegenüber einem Stator einer elektrischen Antriebsmaschine, beispielsweise eines elektronisch kommutierten Elektromotors, eingesetzt, um eine möglichst effiziente elektrische Versorgung der Spulen der elektrischen Antriebsmaschine vornehmen zu können. Bei einer dauerhaften Versorgung einer elektrischen Antriebsmaschine mit elektrischer Energie wird die Lage des Läufers gegenüber dem Stator zum Zeitpunkt der Inbetriebnahme ermittelt und dann mittels eines inkrementalen Positionssensors weiterverfolgt. Allerdings stellt sich bei einer (Not-) Abschaltung einer derartigen elektrischen Antriebsmaschine das Problem, dass eine neuerliche Positionsbestimmung vorgenommen werden muss. Um diese Initialisierung der elektrischen Antriebsmaschine nach jedem Abschaltvorgang zu vermeiden, wird bei den bekannten Verfahren und Vorrichtungen darauf zurückgegriffen, bei fehlender äußerer Spannungsversorgung, beispielsweise bei Fehlen einer Netzspannung für die Antriebsmaschine, die Positionsermittlung auf Basis eines internen Energiespeichers, beispielsweise einer Batterie, vorzunehmen.

Die Aufgabe der Erfindung besteht darin, eine elektrische Antriebsmaschine und ein Verfahren zum Betreiben einer elektrischen Antriebsmaschine bereitzustellen, die mit möglichst geringem Aufwand auch bei fehlender externer Spannungsversorgung eine eindeutige Bestimmung der Position des Läufers gegenüber dem Stator ermöglichen.

Diese Aufgabe wird für eine elektrische Antriebseinrichtung gemäß einem ersten Erfindungsaspekt mit den Merkmalen des Anspruchs 1 gelöst. Hierbei ist vorgesehen, dass die Verarbeitungseinrichtung mehrere Funktionsbereiche umfasst, von denen wenigstens einer zwischen einem Aktivierungszustand und einem Deaktivierungszustand umschaltbar ist und wobei ein erster Funktionsbereich für eine Aktivierung und Deaktivierung eines zweiten Funktionsbereichs ausgebildet ist, wobei der Verarbeitungseinrichtung ein Bewegungssensor zugeordnet, der für eine Bereitstellung eines Signals bei einer Bewegung des Läufers gegenüber dem Stator während der Abschaltung der Spannungsversorgung für die elektrische Antriebsmaschine ausgebildet ist, wobei der erste Funktionsbereich für eine Auswertung des Signals des Bewegungssensors und/oder zur Ausgabe eines Bewegungssignals ausgebildet ist, sofern das Signal des Bewegungssensors einen vorgebbaren Schwellwert übersteigt.

Die Funktionsbereiche der Verarbeitungseinrichtung können beispielsweise als diskrete Bauelemente, beispielsweise in Form unterschiedlicher integrierter Schaltkreise, oder auch als separat mit elektrischer Energie versorgbare Schaltungsblöcke einer gemeinsamen integrierten Schaltung ausgebildet sein. Bevorzugt sind die Funktionsbereiche gemeinsam auf einem Halbleiterbaustein eines Mikroprozessors oder Mikrocontrollers ausgebildet. Dabei kann vorgesehen sein, dass der zweite und gegebenenfalls weitere abschaltbare Funktionsbereiche aufgrund von Signalen des ersten Funktionsbereichs oder aufgrund von externen Eingangssignalen zwischen dem Aktivierungszustand und dem Deaktivierungszustand umgeschaltet werden. Wenigstens einer der Funktionsbereiche, beispielsweise eine Recheneinheit zur eindeutigen Berechnung des Positionssignals anhand der Signale des Sensorsystems, ist abschaltbar ausgebildet, so dass im zweiten Betriebszustand möglichst wenig elektrische Energie verbraucht wird. Besonders vorteilhaft ist es, wenn der erste Funktionsbereich derart ausgebildet ist, dass er bei Eintreffen von Sensorsignalen ein Ansteuersignal an den zweiten Funktionsbereich abgibt, der zur Ermittlung und gegebenenfalls zur Speicherung des Positionssignals ausgebildet ist, um die Ermittlung des Positionssignals vorzunehmen. Bei einem Ausbleiben weiterer Signale des Sensorsystems wird eine Energieversorgung des weiteren Funktionsbereichs durch den ersten Funktionsbereich unterbrochen, um elektrische Energie zu sparen.

Der Bewegungssensor hat die Aufgabe, Relativbewegungen zwischen dem Läufer und dem Stator zu detektieren. Insbesondere sollen Bewegungen detektiert werden, die so schnell stattfinden, dass sie zwischen zwei Messzyklen der Sensoreinrichtung, die entsprechend der niederfrequenten, intermittierenden Bereitstellung von Versorgungsenergie an das Sensorsystem vorgenommen werden, zu einer Mehrdeutigkeit der zum jeweils nächsten Zeitpunkt ermittelbaren Sensorsignale führen würden. Diese Mehrdeutigkeit tritt dann auf, wenn das Sensorsystem aus Sensoren gebildet ist, die jeweils nur einen begrenzten Bewegungsbereich, also beispielsweise bei einem Rotor eines Gleichstrommotors nur einen Bruchteil einer vollen Umdrehung des Rotors, erfassen können. Während des ersten Betriebszustands ist ein derart eingeschränkter Erfassungsbereich des jeweiligen Sensors unproblematisch, da eine kontinuierliche oder derart hochfrequente Erfassung der Läuferstellung durch das Sensorsystem erfolgt, dass stets die genaue Relativposition zwischen Läufer und Stator bekannt ist. Demgegenüber ist bei der niederfrequenten, intermittierenden Bereitstellung von Versorgungsenergie an das Sensorsystem die Bewegungserfassung mittels des Bewegungssensors zweckmäßig, um ansonsten auftretende Lücken in der Positionserfassung zu vermeiden. Die Bewegungserfassung kann zu einer zeitlichen Vorverlagerung des nächsten Messzyklus, also zu einer kurzfristigen, insbesondere einmaligen Anhebung der Messfrequenz führen, so dass ohne weitere Relativbewegungen zwischen Läufer und Stator die anschließenden Messungen mit der ursprünglichen Messfrequenz weitergeführt werden können. Alternativ kann das Bewegungssignal eine zusätzliche Positionserfassung bewirken, die zwischen zwei Messzyklen eingeschoben wird.

In dem ersten Betriebszustand ist eine Versorgung der gesamten elektrischen Antriebseinrichtung mit elektrischer Energie, beispielsweise mit einer externen Versorgungsspannung, insbesondere einer Netzspannung, vorgesehen. Hiermit kann die Antriebseinrichtung mechanische Leistung, beispielsweise in Form einer Linearbewegung oder einer Rotationsbewegung des Läufers gegenüber dem Stator, bereitstellen und beispielsweise an eine Maschinenkomponente abgeben. In diesem Betriebszustand ist der Energiebedarf der elektrischen Spulen im Läufer und/oder im Stator der elektrischen Antriebseinrichtung, die zur Erzeugung der gewünschten Bewegung selektiv mit elektrischer Energie versorgt werden, erheblich höher als der Energiebedarf der Messeinrichtung, die zur Ermittlung der Position des Läufers gegenüber dem Stator eingesetzt wird. Dementsprechend steht der Messeinrichtung eine ausreichende Energiemenge zur Verfügung, um entweder eine kontinuierliche oder eine hochfrequent intermittierende Bereitstellung von Versorgungsenergie an das Sensorsystem gewährleisten zu können. In dem zweiten Betriebszustand ist hingegen keine Leistungsabgabe der elektrischen Antriebseinrichtung vorgesehen, vielmehr handelt es sich um einen Betriebszustand, wie er exemplarisch nach einer planmäßigen oder außerplanmäßigen (Not-) Abschaltung der elektrischen Antriebseinrichtung vorliegen kann. In diesem zweiten Betriebszustand wird die Energieversorgung von außen vollständig unterbrochen. Aufgrund äußerer Einflüsse, beispielsweise aufgrund von Trägheitseffekten von mechanischen Komponenten, die mit der elektrischen Antriebseinrichtung mechanisch wirkverbunden sind oder durch Kräfteeinwirkung auf diese Komponenten kann es auch nach Abschaltung der externen Versorgungsspannung zu Relativbewegungen zwischen Läufer und Stator kommen. Sofern diese Relativbewegungen nicht überwacht und erfasst werden, muss bei einer Wiederinbetriebnahme der elektrischen Antriebsmaschine eine Initialisierung der Position des Läufers gegenüber dem Stator erfolgen. Daher besteht der Wunsch, diese Relativbewegungen trotz fehlender Versorgungsspannung zuverlässig und mit geringem Aufwand nachvollziehen zu können. Dadurch soll sichergestellt werden, dass die elektrische Antriebseinrichtung bei neuerlicher Bereitstellung der externen Versorgungsspannung schnellstmöglich, vorzugsweise verzögerungsfrei, wieder eingesetzt werden kann. Dies setzt jedoch die Kenntnis über die exakte Lage des Läufers gegenüber dem Stator voraus. Um dies mit möglichst geringem Aufwand zu ermöglichen, ist es vorteilhaft, das ohnehin für den aktiven Betrieb der elektrischen Antriebseinrichtung vorgesehene Sensorsystem auch bei passiven Bewegungen, die von außen auf die elektrische Antriebseinrichtung eingeprägt werden, auch für den zweiten Betriebszustand zu nutzen. Um den Energieaufwand für die Positionsbestimmung im zweiten Betriebszustand zu minimieren und dementsprechend bei kleinem Energiespeicher eine lange Überwachungsdauer zu gewährleisten, ist es vorteilhaft, wenn eine Abfrage der Position des Läufers gegenüber dem Stator mit einer niedrigeren Frequenz als im ersten Betriebszustand vorgenommen wird. Somit findet abweichend vom ersten Betriebszustand keine permanente oder hochfrequente Energieversorgung des Sensorsystems statt, sondern eine niederfrequente Energieversorgung. Dementsprechend ist ein kleiner Energiespeicher ausreichend, um eine lange Überwachungsdauer für die elektrische Antriebseinrichtung zu erzielen.

Vorteilhafte Weiterbildungen der Erfindung sind in den Unteransprüchen angegeben.

Zweckmäßig ist es, wenn der Verarbeitungseinrichtung eine Kondensatoranordnung zugeordnet ist, die für eine Bereitstellung der Versorgungsenergie an die Verarbeitungseinrichtung während einer Abschaltung einer Spannungsversorgung für die elektrische Antriebsmaschine ausgebildet ist. Die Kondensatoranordnung kann während des ersten Betriebszustands der elektrischen Antriebseinrichtung in einfacher Weise mit elektrischer Energie geladen werden. Im Gegensatz zu den aus dem Stand der Technik bekannten Pufferbatterien oder Pufferakkus, die eine begrenzte Lebensdauer aufweisen und im Falle von Pufferakkus eine elektronische Schaltung zum Schutz vor Überladung und Unterladung benötigen, ist somit der schaltungstechnische Aufwand für den Energiespeicher minimal. Zudem kann die Kondensatoranordnung zusammen mit der übrigen Messeinrichtung entsorgt werden. Demgegenüber erfordern derzeit übliche Pufferbatterien und Pufferakkus aufgrund der darin enthaltenen Schwermetalle eine separate und damit aufwendige Entsorgung.

Vorteilhaft ist es, wenn die Kondensatoranordnung derart elektrisch mit einer Spulenwicklung des Stators und/oder des Läufers gekoppelt ist, dass während des zweiten Betriebszustands, in dem die elektrische Antriebsmaschine von der Spannungsversorgung getrennt ist, eine im Läufer und/oder im Stator induzierte elektrische Spannung, insbesondere eine Zwischenkreisspannung, als Ladespannung für die Kondensatoranordnung bereitstellbar ist. Damit wird die gewünschte Verkleinerung der vorteilhaft als Kondensatoranordnung ausgebildeten Energiespeichereinrichtung unterstützt. Bei Bewegungen des Läufers gegenüber dem Stator kann die im Generatorbetrieb in der Antriebsmaschine induzierte Spannung unmittelbar zum Laden der Kondensatoranordnung und damit zum Betrieb der Messeinrichtung während des zweiten Betriebszustands genutzt werden.

Dementsprechend ist bei einer vorteilhaften Weiterbildung der Erfindung vorgesehen, dass die Verarbeitungseinrichtung für eine Bereitstellung von Versorgungsenergie an das Sensorsystem bei Vorliegen des Bewegungssignals ausgebildet ist. Zweckmäßig ist es, wenn der Bewegungssensor als Strom- und/oder Spannungssensor für eine Ermittlung eines elektrischen Potentials in einer Spulenwicklung des Stators und/oder des Läufers ausgebildet ist, um bei einer Relativbewegung zwischen Stator und Läufer eine im Läufer und/oder Stator induzierte elektrische Spannung zu detektieren und bei Überschreiten des vorgebbaren Schwellwerts der induzierten Spannung das Bewegungssignal auszugeben. Die Bewertung des ermittelten Stroms oder des ermittelten Spannungspotentials findet vorzugsweise in dem ersten Funktionsbereich der Verarbeitungseinrichtung statt, der dann bei Bedarf, insbesondere bei Überschreitung des vorgebbaren Schwellwerts durch das Signal des Bewegungssensors, ein Bewegungssignal an weitere Funktionsbereiche ausgeben kann, um eine Bereitstellung von Versorgungsenergie an das Sensorsystem und eine Auswertung der Signale des Sensorsystems sowie eine Speicherung des ermittelten Positionssignals durchzuführen.

Vorteilhaft ist es, wenn die Messeinrichtung einen zur Abtastung einer Position des Läufers ausgebildeten, insbesondere mit dem Läufer gekoppelten, Messgeber umfasst, der für eine Bereitstellung eines Positionssignals im ersten Betriebszustand vorgesehen ist. Mit Hilfe dieses Messgebers, bei dem es sich insbesondere um einen inkremental arbeitenden oder single-turn absoluten Sensor für rotatorische oder translatorische Bewegungen handelt, kann im ersten Betriebszustand eine zusätzliche Positionsbestimmung für den Läufer vorgenommen werden, die mit der Positionsbestimmung durch das Sensorsystem abgeglichen wird und gegebenenfalls auch eine höhere Positioniergenauigkeit ermöglicht.

Die Aufgabe der Erfindung wird gemäß einem zweiten Erfindungsaspekt mit den Merkmalen des Anspruchs 7 gelöst. Hierbei ist vorgesehen, dass eine Überwachung einer elektrischen Antriebsmaschine, die einen Stator und einen dazu relativbeweglichen Läufer sowie eine Messeinrichtung umfasst, die zur Ermittlung einer Position des relativbeweglich zum Stator gelagerten Läufers ausgebildet ist und die ein Sensorsystem für eine Bereitstellung von Sensorsignalen in Abhängigkeit von der Position des Läufers relativ zum Stator und eine Verarbeitungseinrichtung zur Ansteuerung des Sensorsystems, zur Verarbeitung der Sensorsignale sowie zur Ausgabe eines Positionssignals aufweist, mit den folgenden Schritten durchgeführt wird: kontinuierliches oder hochfrequent intermittierendes Bereitstellen von Versorgungsenergie an das Sensorsystem durch die Verarbeitungseinrichtung in einem ersten Betriebszustand und niederfrequent intermittierendes Bereitstellen von Versorgungsenergie an das Sensorsystem in einem zweiten Betriebszustand sowie Auswerten des Sensorsignals von der Verarbeitungseinrichtung und Ausgabe und/oder Speicherung eines Positionssignals zur Beschreibung der Lage des Läufers gegenüber dem Stator, wobei die Verarbeitungseinrichtung mehrere Funktionsbereiche umfasst und im zweiten Betriebszustand ein erster Funktionsbereich die niederfrequent intermittierende Bereitstellung von Versorgungsenergie an das Sensorsystem und/oder eine Umschaltung wenigstens eines weiteren Funktionsbereichs zwischen einem Deaktivierungszustand und einem Aktivierungszustand zur Auswertung des Sensorsignals sowie zur Ausgabe und/oder Speicherung des Positionssignals vornimmt, wobei der Verarbeitungseinrichtung ein Bewegungssensor zugeordnet ist, der eine Bewegung des Läufers gegenüber dem Stator während der Abschaltung der Spannungsversorgung für die elektrische Antriebsmaschine detektiert und im ersten Funktionsbereich ein Bewegungssignal hervorruft, sofern ein Signal des Bewegungssensors einen vorgebbaren Schwellwert überschreitet, so dass durch die Verarbeitungseinrichtung, insbesondere durch den ersten Funktionsbereich eine Aktivierung des zweiten Funktionsbereichs und/oder eine Bereitstellung von Versorgungsenergie an das Sensorsystem erfolgt.

Im zweiten Betriebszustand ist aus Gründen der Energieersparnis nur eine gelegentliche Versorgung des Sensorsystems mit elektrischer Energie vorgesehen. Dadurch wird der Energieverbrauch der Messeinrichtung und somit die Belastung des Energiespeichers, der der Messeinrichtung zugeordnet ist, gering gehalten.

Bei einer Weiterbildung des Verfahrens ist vorgesehen, dass während einer Abschaltung einer Spannungsversorgung für die elektrische Antriebsmaschine eine Bereitstellung der Versorgungsenergie an die Verarbeitungseinrichtung von einer Kondensatoranordnung erfolgt. Die Kondensatoranordnung stellt die gespeicherte elektrische Energie ohne eine aufwendige elektrische Schaltung zur Verfügung und kann vorteilhaft während des ersten Betriebszustands mit Hilfe der elektrischen Energie, die für die Bewegung des Läufers gegenüber dem Stator bereitgestellt wird, aufgeladen werden.

Zusätzlich kann die Kondensatoranordnung während des zweiten Betriebszustands, in dem die elektrische Antriebsmaschine von einer äußeren Versorgung getrennt ist, mittels einer im Läufer und/oder im Stator induzierten elektrischen Spannung aufgeladen werden, wobei vorzugsweise eine elektrische Kopplung der Kondensatoranordnung mit einer Spulenwicklung des Stators und/oder des Läufers vorgesehen ist. Somit wird die elektrische Antriebseinrichtung als Generator für eine Energierückgewinnung genutzt, sofern die Aufbauweise der elektrischen Antriebseinrichtung dies zulässt.

Durch die Abschaltung eines oder mehrerer Funktionsbereiche, die im ersten Betriebszustand für die Berechnung des Positionssignals und/oder für eine weitere Signalverarbeitung zuständig sind, kann eine erhebliche Energiemenge eingespart werden. Um jedoch eine Berechnung der Position des Läufers gegenüber dem Stator auch im zweiten Betriebszustand zu ermöglichen, ist der erste Funktionsbereich derart ausgebildet, dass er die dazu notwendigen weiteren Funktionsbereiche aktivieren und nach Berechnung und Speicherung des Positionswerts auch wieder deaktivieren kann. Hierdurch wird bei geringem Energieverbrauch die volle Funktionalität der Verarbeitungseinrichtung bei der Signalverarbeitung bereitgestellt. Je nach Ausgestaltung der Messeinrichtung ist der erste Funktiönsbereich lediglich als Zeitglied ausgebildet oder umfasst auch eine Funktionalität zur Bereitstellung der elektrischen Versorgungsenergie an das Sensorsystem. Bei der ersten Ausführungsform der Messeinrichtung findet im zweiten Betriebszustand eine nahezu vollständige Abschaltung der Messeinrichtung statt, lediglich ein Zeitglied oder Timer ist permanent in Betrieb und liefert nach Ablauf einer vorgebbaren Zeitspanne ein Aufwecksignal an den zweiten Funktionsbereich und gegebenenfalls an weitere Funktionsbereiche. Aufgrund dieses Aufwecksignals wird dann vom zweiten Funktionsbereich die Bereitstellung der Versorgungsenergie an das Sensorsystem sowie die Auswertung und Speicherung der gewonnenen Sensorsignale vorgenommen. Bei der zweiten Ausgestaltung der Messeinrichtung wird die Versorgungsenergie für das Sensorsystem vom ersten Funktionsbereich bereitgestellt und die Verarbeitung und Speicherung des Sensorsignals findet im zweiten und gegebenenfalls in weiteren Funktionsbereichen statt.

Der Bewegungssensor kann eine zusätzliche Positionsermittlung durch das Sensorsystem herbeiführen, die in dem zeitlichen Intervall zwischen der niederfrequent intermittierenden Bereitstellung von Versorgungsenergie an das Sensorsystem vorgenommen wird.

Durch diese zusätzliche Positionsermittlung kann vermieden werden, dass durch rasche Bewegungen des Läufers zwischen den regelmäßig anstehenden Positionsmessungen eine Positionsveränderung stattfindet, die gegebenenfalls aufgrund eines beschränkten Messbereichs des Sensorsystems zu einem unerwünschten Messfehler führen könnte. Vorzugsweise ist der Bewegungssensor als Strom- und/oder Spannungssensor ausgebildet und erfasst eine durch Relativbewegung zwischen Stator und Läufer induzierte elektrische Spannung in einer Spule.

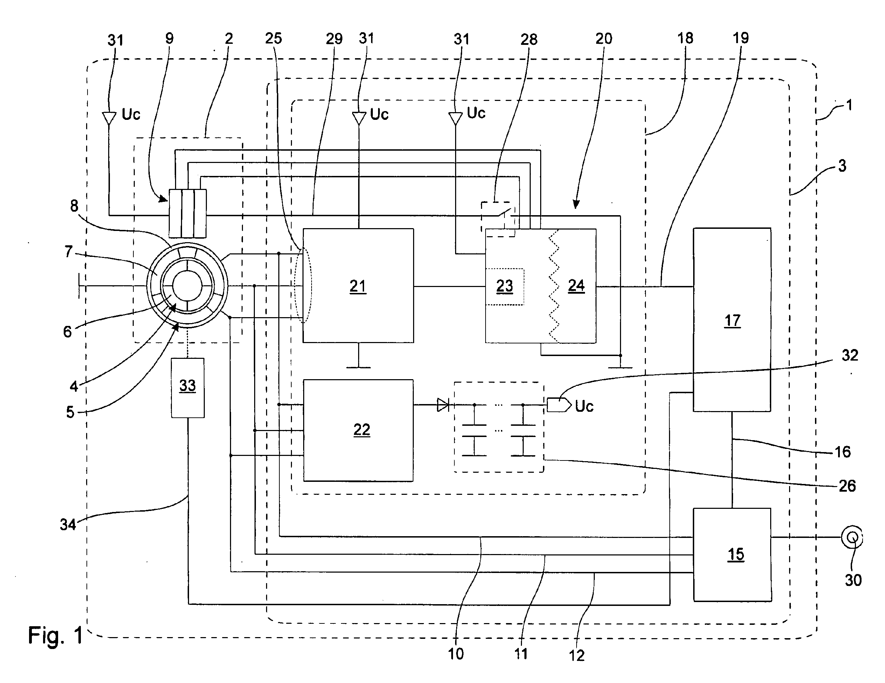

## Patentansprüche

1. Elektrische Antriebsmaschine mit einem Läufer (4) und einem Stator (5) sowie mit einer Messeinrichtung (18), die zur Ermittlung einer Position des relativbeweglich zum Stator (5) gelagerten Läufers (4) ausgebildet ist und die ein Sensorsystem (9) für eine Bereitstellung von Sensorsignalen in Abhängigkeit von der Position des Läufers (4) relativ zum Stator (5) und eine Verarbeitungseinrichtung (20) zur Ansteuerung des Sensorsystems (9), zur Verarbeitung der Sensorsignale sowie zur Ausgabe eines Positionssignals umfasst, wobei die Verarbeitungseinrichtung (20) für eine Umschaltung zwischen einem ersten Betriebszustand mit kontinuierlicher oder hochfrequent intermittierender Bereitstellung von Versorgungsenergie an das Sensorsystem (9) und einem zweiten Betriebszustand mit niederfrequent intermittierender Bereitstellung von Versorgungsenergie an das Sensorsystem (9) ausgebildet ist, wobei die Verarbeitungseinrichtung (20) mehrere Funktionsbereiche (23, 24) umfasst, von denen wenigstens einer zwischen einem Aktivierungszustand und einem Deaktivierungszustand umschaltbar ist und wobei ein erster Funktionsbereich (23) für eine Aktivierung und Deaktivierung eines zweiten Funktionsbereichs (24) ausgebildet ist, wobei der Verarbeitungseinrichtung (20) ein Bewegungssensor (21) zugeordnet ist, der für eine Bereitstellung eines Signals bei einer Bewegung des Läufers (4) gegenüber dem Stator (5) während der Abschaltung der Spannungsversorgung für die elektrische Antriebsmaschine (1) ausgebildet ist und dass der erste Funktionsbereich (23) für eine Aktivierung des zweiten Funktionsbereichs (24) und/oder eine Auswertung des Signals des Bewegungssensors (21) und/oder zur Ausgabe eines Bewegungssignals ausgebildet ist, sofern das Signal des Bewegungssensors (21) einen vorgebbaren Schwellwert übersteigt.

2. Elektrische Antriebsmaschine nach Anspruch 1, **dadurch gekennzeichnet, dass** der Verarbeitungseinrichtung (20) eine Kondensatoranordnung (26) zugeordnet ist, die für eine Bereitstellung der Versorgungsenergie an die Verarbeitungseinrichtung (20) während einer Abschaltung einer Spannungsversorgung für die elektrische Antriebsmaschine (1) ausgebildet ist.

3. Elektrische Antriebsmaschine nach Anspruch 2, **dadurch gekennzeichnet, dass** die Kondensatoranordnung (26) derart elektrisch mit einer Spulenwicklung (7) des Stators (5) und/oder des Läufers (4) gekoppelt ist, dass während des zweiten Betriebszustands, in dem die elektrische Antriebsmaschine (1) von der Spannungsversorgung getrennt ist, eine im Läufer (4) und/oder im Stator (5) induzierte elektrische Spannung, insbesondere eine Zwischenkreisspannung, als Ladespannung für die Kondensatoranordnung (26) bereitstellbar ist.

4. Elektrische Antriebsmaschine nach Anspruch 1, **dadurch gekennzeichnet, dass** die Verarbeitungseinrichtung (20) für eine Bereitstellung von Versorgungsenergie an das Sensorsystem (9) bei Vorliegen des Bewegungssignals ausgebildet ist.

5. Elektrische Antriebsmaschine nach Anspruch 1 oder 4, **dadurch gekennzeichnet, dass** der Bewegungssensor (21) als Strom- und/oder Spannungssensor für eine Ermittlung eines elektrischen Potentials in einer Spulenwicklung (7) des Stators (5) und/oder des Läufers (4) ausgebildet ist, um bei einer Relativbewegung zwischen Stator (5) und Läufer (4) eine im Läufer (4) und/oder Stator (5) induzierte elektrische Spannung zu detektieren und bei Überschreiten des vorgebbaren Schwellwerts der induzierten Spannung das Bewegungssignal auszugeben.

6. Elektrische Antriebsmaschine nach einem der vorhergehenden Ansprüche, **dadurch gekennzeichnet, dass** die Messeinrichtung (18) einen zur Abtastung einer Position des Läufers ausgebildeten, insbesondere mit dem Läufer gekoppelten, Messgeber (33) umfasst, der für eine Bereitstellung eines Positionssignals im ersten Betriebszustand vorgesehen ist.

7. Verfahren zum Überwachen einer elektrischen Antriebsmaschine, die einen Stator (5) und einen dazu relativbeweglichen Läufer (4) sowie eine Messeinrichtung (18) umfasst, die zur Ermittlung einer Position des relativbeweglich zum Stator (5) gelagerten Läufers (5) ausgebildet ist und die ein Sensorsystem (9) für eine Bereitstellung von Sensorsignalen in Abhängigkeit von der Position des Läufers (4) relativ zum Stator (5) und eine Verarbeitungseinrichtung (20) zur Ansteuerung des Sensorsystems (9), zur Verarbeitung der Sensorsignale sowie zur Ausgabe eines Positionssignals aufweist, **gekennzeichnet durch** die Schritte: kontinuierliches oder hochfrequent intermittierendes Bereitstellen von Versorgungsenergie an das Sensorsystem (9) **durch** die Verarbeitungseinrichtung (20) in einem ersten Betriebszustand und niederfrequent intermittierendes Bereitstellen von Versorgungsenergie an das Sensorsystem (9) einem in zweiten Betriebszustand sowie Auswerten des Sensorsignals von der Verarbeitungseinrichtung (20) und Ausgabe und/oder Speicherung eines Positionssignals zur Beschreibung der Lage des Läufers (4) gegenüber dem Stator (5), wobei die Verarbeitungseinrichtung (20) mehrere Funktionsbereiche (23, 24) umfasst und im zweiten Betriebszustand ein erster Funktionsbereich (23) die niederfrequent intermittierende Bereitstellung von Versorgungsenergie an das Sensorsystem (9) und eine Umschaltung wenigstens eines weiteren Funktionsbereichs (24) zwischen einem Deaktivierungszustand und einem Aktivierungszustand zur Auswertung des Sensorsignals sowie zur Ausgabe und/oder Speicherung des Positionssignals vornimmt und wobei der Verarbeitungseinrichtung (20) ein Bewegungssensor (21) zugeordnet ist, der eine Bewegung des Läufers (4) gegenüber dem Stator (5) während der Abschaltung der Spannungsversorgung für die elektrische Antriebsmaschine (1) detektiert und im ersten Funktionsbereich (23) ein Bewegungssignal hervorruft, sofern ein Signal des Bewegungssensors (21), so dass **durch** die Verarbeitungseinrichtung (20) eine Bereitstellung von Versorgungsenergie an das Sensorsystem (9) erfolgt.

8. Verfahren nach Anspruch 7, **dadurch gekennzeichnet, dass** während einer Abschaltung einer Spannungsversorgung für die elektrische Antriebsmaschine (1) eine Bereitstellung der Versorgungsenergie an die Verarbeitungseinrichtung (20) von einer Kondensatoranordnung (26) erfolgt.

9. Verfahren nach Anspruch 8, **dadurch gekennzeichnet, dass** eine Aufladung der Kondensatoranordnung (26) während des zweiten Betriebszustands, in dem die elektrische Antriebsmaschine (1) von einer äußeren Versorgung (30) getrennt ist, mittels einer im Läufer (4) und/oder im Stator (5) induzierten elektrischen Spannung erfolgt, wobei vorzugsweise eine elektrische Kopplung der Kondensatoranordnung (26) mit einer Spulenwicklung (7) des Stators (5) und/oder des Läufers (4) vorgesehen ist.

10. Verfahren nach einem der Ansprüche 7 bis 9, **dadurch gekennzeichnet, dass** die Frequenz für die niederfrequente intermittierende Bereitstellung von Versorgungsenergie an das Sensorsystem (9) im zweiten Betriebszustand und der Schwellwert für das Bewegungssignal derart aufeinander abgestimmt sind, dass eine Relativbewegung des Läufers (4) gegenüber dem Stator (5) innerhalb eines zeitlichen Intervalls zwischen zwei Messungen, die zu einer Überschreitung eines von der Anordnung der Sensoren (9) des Sensorsystems bestimmten Messbereichs führen würde, zur Ausgabe des Bewegungssignals führt.

## Claims

1. Electrical drive motor with a rotor (4) and a stator (5), together with a measuring device (18), which is designed to determine a position of the rotor (4), mounted so as to be movable relative to the stator (5), and which includes a sensor system (9) for provision of sensor signals depending on the position of the rotor (4) relative to the stator (5), and a processing device (20) for control of the sensor system (9), for processing the sensor signals and for the output of a position signal, wherein the processing device (20) is designed for switching between a first operating state with continuous or high-frequency intermittent provision of power to the sensor system (9), and a second operating state with low-frequency intermittent provision of power to the sensor system (9), wherein the processing device (20) includes several function areas (23, 24), of which at least one may be switched between an activation state and a deactivation state and wherein a first function area (23) is designed for activation and deactivation of a second function area (24), wherein the processing device (20) is assigned a movement sensor (21) which is designed to provide a signal in the case of a movement of the rotor (4) relative to the stator (5) during disconnection of the power supply for the electrical drive motor (1), and that the first function area (23) is designed for activation of the second function area (24) and/or evaluation of the signal of the movement sensor (21) and/or output of a movement signal if the signal of the movement sensor (21) exceeds a presettable threshold value.

2. Electrical drive motor according to claim 1, **characterised in that** the processing device (20) is assigned a capacitor assembly (26) which is designed to provide power to the processing device (20) during disconnection of a power supply to the electrical drive motor (1).

3. Electrical drive motor according to claim 2, **characterised in that** the capacitor assembly (26) is so connected electrically to a coil winding (7) of the stator (5) and/or the rotor (4) that, during the second operating state in which the electrical drive motor (1) is cut off from the power supply, an electrical voltage induced in the rotor (4) and/or in the stator (5), in particular an intermediate circuit voltage, may be provided as charging voltage for the capacitor assembly (26).

4. Electrical drive motor according to claim 1, **characterised in that** the processing device (20) is designed to provide power to the sensor system (9) in the presence of a movement signal.

5. Electrical drive motor according to claim 1 or 4, **characterised in that** the movement sensor (21) is in the form of a current and/or voltage sensor for determining an electrical potential in a coil winding (7) of the stator (5) and/or the rotor (4) in order to detect, during a relative movement between stator (5) and rotor (4), an induced electrical voltage in the rotor (4) and/or stator (5), and to emit the movement signal if the presettable threshold value of the induced voltage is exceeded.

6. Electrical drive motor according to any of the preceding claims, **characterised in that** the measuring device (18) includes a measuring transducer (33), in particular connected to the rotor, for scanning a position of the rotor and provided to supply a position signal in the first operating state.

7. Method for the monitoring of an electrical drive motor comprising a stator (5) and a rotor (4) which is movable relative to the former, together with a measuring device (18), which is designed to determine a position of the rotor (4), mounted so as to be movable relative to the stator (5), and which includes a sensor system (9) for provision of sensor signals depending on the position of the rotor (4) relative to the stator (5), and a processing device (20) for control of the sensor system (9), for processing the sensor signals and for the output of a position signal, **characterised by** the steps: continuous or high-frequency intermittent provision of power to the sensor system (9 by the processing device (20) in a first operating state, and low-frequency intermittent provision of power to the sensor system (9) in a second operating state, together with evaluation of the sensor signals by the processing device (20) and output and/or storage of a position signal to describe the position of the rotor (4) relative to the stator (5), wherein the processing device (20) includes several function areas (23, 24) and, in the second operating state, a first function area (23) undertakes the the low-frequency intermittent provision of power to the sensor system (9) and a switching of at least one further function area (24) between a deactivation state and an activation state for evaluation of the sensor signals and also for the output and/or storage of the position signal, and wherein the processing device (20) is assigned a movement sensor (21) which detects movement of the rotor (4) relative to the stator (5) during disconnection of the power supply for the electrical drive motor (1) and in the first function area (23) generates a movement signal, if there is a signal from the movement sensor (21), so that provision of power to the sensor system (9) is effected by the processing device (20).

8. Method according to claim 7 **characterised in that**, during disconnection of power supply to the electrical drive motor (1), a supply of power to the processing device (20) is effected by a capacitor assembly (26).

9. Method according to claim 9, **characterised in that** charging of the capacitor assembly (26) during the second operating state, in which the electrical drive motor (1) is disconnected from an external supply (30), is effected by means of an electrical voltage induced in the rotor (4) and/or in the stator (5), wherein preferably an electrical connection is provided between the capacitor assembly (26) and a coil winding (7) of the stator (5) and/or the rotor (4).

10. Method according to any of claims 7 to 9, **characterised in that** the frequency for the low-frequency intermittent provision of power to the sensor system (9) in the second operating state and the threshold value for the movement signal are so matched to one another that a relative movement of the rotor (4) relative to the stator (5) within a time interval between two measurements, which would lead to an overshoot of a measuring range determined by the arrangement of the sensors (9) of the sensor system, leads to output of the movement signal.

## Revendications

1. Machine d'entraînement électrique comprenant un rotor (4) et un stator (5) ainsi qu'un dispositif de mesure (18), qui est réalisé afin de déterminer une position du rotor (4) logé de manière relativement mobile par rapport au stator (5) et qui comprend un système de capteur (9) en vue de fournir des signaux de capteur en fonction de la position du rotor (4) par rapport au stator (5) et un dispositif de traitement (20) servant à commander le système de capteur (9) et servant à traiter les signaux de capteur ainsi qu'à émettre un signal de position, sachant que le dispositif de traitement (20) est réalisé en vue de procéder à une commutation entre un premier état de fonctionnement impliquant de fournir en continu ou par intermittence à une fréquence élevée une énergie d'alimentation au système de capteur (9) et un deuxième état de fonctionnement impliquant de fournir par intermittence à une fréquence basse une énergie d'alimentation au système de capteur (9), sachant que le dispositif de traitement (20) comprend plusieurs zones fonctionnelles (23, 24), parmi lesquelles au moins une d'elles peut être commutée entre un état d'activation et un état de désactivation et sachant qu'une première zone fonctionnelle (23) est réalisée en vue d'activer et de désactiver une deuxième zone fonctionnelle (24), sachant qu'est associé au dispositif de traitement (20) un capteur de mouvement (21), qui est réalisé en vue de fournir un signal en cas d'un mouvement du rotor (4) par rapport au stator (5) au cours de la coupure de l'alimentation en tension pour la machine d'entraînement (1) électrique, et sachant que la première zone fonctionnelle (23) est réalisée en vue d'activer la deuxième zone fonctionnelle (24) et/ou en vue d'interpréter le signal du capteur de mouvement (21) et/ou en vue d'émettre un signal de mouvement, tant que le signal du capteur de mouvement (21) dépasse une valeur de seuil pouvant être prédéfinie.

2. Machine d'entraînement électrique selon la revendication 1, **caractérisée en ce qu'**est associé au dispositif de traitement (20) un ensemble de condensateurs (26), qui est réalisé en vue de fournir de l'énergie d'alimentation au dispositif de traitement (20) au cours d'une coupure d'une alimentation en tension pour la machine d'entraînement (1) électrique.

3. Machine d'entraînement électrique selon la revendication 2, **caractérisée en ce que** l'ensemble de condensateurs (26) est couplé électriquement à un enroulement de bobine (7) du stator (5) et/ou du rotor (4) de telle manière que lors du deuxième état de fonctionnement, lors duquel la machine d'entraînement (1) électrique est séparée de l'alimentation en tension, une tension électrique induite dans le rotor (4) et/ou dans le stator (5), en particulier une tension de circuit intermédiaire, peut être fournie en tant que tension de charge pour l'ensemble de condensateurs (26).

4. Machine d'entraînement électrique selon la revendication 1, **caractérisée en ce que** le dispositif de traitement (20) est réalisé en vue de fournir au système de capteur (9) de l'énergie d'alimentation en présence du signal de mouvement.

5. Machine d'entraînement électrique selon la revendication 1 ou 4, **caractérisée en ce que** le capteur de mouvement (21) est réalisé sous la forme d'un capteur de courant et/ou d'un capteur de tension en vue de déterminer un potentiel électrique dans un enroulement de bobine (7) du stator (5) et/ou du rotor (4) afin de détecter, dans le cas d'un mouvement relatif entre le stator (5) et le rotor (4), une tension électrique induite dans le rotor (4) et/ou le stator (5) et afin d'émettre le signal de mouvement en cas de dépassement de la valeur de seuil, pouvant être prédéfinie, de la tension induite.

6. Machine d'entraînement électrique selon l'une quelconque des revendications précédentes, **caractérisée en ce que** le dispositif de mesure (18) comprend un transmetteur de mesure (33) réalisé afin de balayer une position du rotor, en particulier couplé au rotor, lequel transmetteur de mesure est prévu en vue de fournir un signal de position dans le premier état de fonctionnement.

7. Procédé servant à surveiller une machine d'entraînement électrique, qui comprend un stator (5) et un rotor (4) relativement mobile par rapport au stator ainsi qu'un dispositif de mesure (18), qui est réalisé afin de déterminer une position du rotor (5) logé de manière relativement mobile par rapport au stator (5) et qui présente un système de capteur (9) en vue de fournir des signaux de capteur en fonction de la position du rotor (4) par rapport au stator (5) et un dispositif de traitement (20) servant à commander le système de capteur (9), servant à traiter les signaux de capteur ainsi qu'à émettre un signal de position, **caractérisé par** les étapes qui suivent consistant à : fournir en continu ou par intermittence à une fréquence élevée au système de capteur (9) de l'énergie d'alimentation par le dispositif de traitement (20) dans le premier état de fonctionnement, et fournir par intermittence à une fréquence basse au système de capteur (9) de l'énergie d'alimentation dans le deuxième état de fonctionnement, ainsi que faire interpréter le signal de capteur par le dispositif de traitement (20) et émettre et/ou stocker un signal de position servant à décrire la position du rotor (4) par rapport au stator (5), sachant que le dispositif de traitement (20) comprend plusieurs zones fonctionnelles (23, 24) et que lors du deuxième état de fonctionnement, une première zone fonctionnelle (23) fournit par intermittence à une fréquence basse au système de capteur (9) de l'énergie d'aliment et commute au moins une autre zone fonctionnelle (24) entre un état de désactivation et un état d'activation afin d'interpréter le signal de capteur ainsi que d'émettre et/ou de stocker le signal de position, et sachant qu'est associé au dispositif de traitement (20) un capteur de mouvement (21), qui détecte un mouvement du rotor (4) par rapport au stator (5) au cours de la coupure de l'alimentation en tension pour la machine d'entraînement (1) électrique et qui provoque, dans la première zone fonctionnelle (23), un signal de mouvement, dans une certaine mesure un signal du capteur de mouvement (21) de sorte de l'énergie d'alimentation est fournie au système de capteur (9) par le dispositif de traitement (20).

8. Procédé selon la revendication 7, **caractérisé en ce que** lors de la coupure d'une alimentation en tension pour la machine d'entraînement (1) électrique, de l'énergie d'alimentation est fournie au dispositif de traitement (20) par un ensemble de condensateurs (26).

9. Procédé selon la revendication 8, **caractérisé en ce que** l'ensemble de condensateurs (26) est chargé au moyen d'une tension électrique induite dans le rotor (4) et/ou dans le stator (5) lors du deuxième état de fonctionnement, lors duquel la machine d'entraînement (1) électrique est séparée d'une alimentation (30) extérieure, sachant que de préférence un couplage électrique de l'ensemble de condensateurs (26) est prévue avec un enroulement de bobine (7) du stator (5) et/ou du rotor (4).

10. Procédé selon l'une quelconque des revendications 7 à 9, **caractérisé en ce que** la fréquence à laquelle de l'énergie d'alimentation est fournie par intermittence à une fréquence basse au système de capteur (9) dans le deuxième état de fonctionnement et la valeur de seuil pour le signal de mouvement sont ajustées l'une sur l'autre de telle manière qu'un mouvement relatif du rotor (4) par rapport au stator (5) au cours d'un laps de temps entre deux mesures, qui conduiraient à un dépassement d'une zone de mesure définie par l'ensemble des capteurs (9) du système de capteur, conduit à l'émission du signal de mouvement.
